# EUROPEAN PATENT APPLICATION

(11) **EP 2 857 961 A1**
(43) Date of publication of application: **08.04.2015**
(21) Application number: 13867968.3
(22) Date of filing: 19.06.2013
(51) Int. Cl.: G06F 9/44

(54) **TASK EVENT PROCESSING METHOD AND DEVICE**

(30) Priority: 31.12.2012 CN 201210591713
(71) Applicant: Huawei Device Co., Ltd., Shenzhen, Guangdong 518129 (CN)
(72) Inventor: WU, Gang, Shenzhen Guangdong 518129 (CN); WEI, Huan, Shenzhen Guangdong 518129 (CN)
(74) Representative: Thun, Clemens
(86) International application number: PCT/CN2013/077434
(87) International publication number: WO 2014/101376

(57) **Abstract**

Embodiments of the present invention provide a method and an apparatus for processing a task event. The method includes: creating a function button for a task event, and adding the function button to a status item corresponding to the task event in a status bar; and executing, in the status item, a function corresponding to the function button when an operation on the function button is detected. The method and the apparatus for processing a task event according to the embodiments of the present invention can improve efficiency of viewing and processing the task event.

## Description

### TECHNICAL FIELD

Embodiments of the present invention relates to data processing technologies, and in particular, to a method and an apparatus for processing a task event.

### BACKGROUND

With development of communications technologies, intelligent terminals become more popular. In addition to phone and SMS message functions, an intelligent terminal further supports instant messaging software such as Microblog and WeChat; therefore, the intelligent terminal generally needs to process a plurality of task events.

In the prior art, a drop-down status bar is generally used to display all detected task events in a centralized manner, for example, received SMS messages, QQ messages, incoming calls, and system notification messages. When a task event in the status bar of the intelligent terminal is tapped for processing, a system needs to interrupt a current application operation of a user, invoke an application program corresponding to the tapped task event, access an application interface of the application program, and then perform an operation on the application interface to process the task event.

According to the solution for processing a task event in the prior art, the user is required to interrupt the current application operation and perform interface switching, and cannot quickly process various types of task events in the status bar. As a result, efficiency of processing the task events is low.

### SUMMARY

Embodiments of the present invention provide a method and an apparatus for processing a task event, so as to improve efficiency of viewing and processing the task event.

According to a first aspect, an embodiment of the present invention provides a method for processing a task event, including:
creating a function button for a task event, and adding the function button to a status item corresponding to the task event in a status bar; and
executing, in the status item, a function corresponding to the function button when an operation on the function button is detected.

In a first possible implementation manner of the first aspect, before the creating a function button for a task event, the method further includes:
classifying the task event according to an event type of the task event; and
adding, according to the classification, the task event to a status item on a tab corresponding to a type in the status bar.

With reference to the first aspect or the first possible implementation manner of the first aspect, in a second possible implementation manner, the classifying the task event according to an event type of the task event specifically includes:
determining, according to a system attribute of the task event, that a task event whose system attribute is a system internal event is of a notification type, and that a task event whose system attribute is a system external event is of a non-notification type;
determining, according to a type attribute of the task event of the non-notification type, that a talk-type task event is of a call type, and that a non-talk-type task event is of a non-call type; and
determining, according to a number attribute of the task event of the non-call type, that a task event whose number attribute is a set number range is of a notification type, and a task event whose number attribute is not a set number range is of an information type.

With reference to the first aspect, the first possible implementation manner of the first aspect, or the second possible implementation manner of the first aspect, in a third possible implementation manner, the creating a function button for a task event specifically includes:
creating a corresponding function button for the task event according to the classification.

With reference to the first aspect or the third possible implementation manner of the first aspect, in a fourth possible implementation manner, the corresponding function button is a reply button, and the executing, in the status item, a function corresponding to the function button when an operation on the function button is detected specifically includes:
adding an input bar to the status item when an operation on the reply button is detected; and
processing and/or sending, by invoking a reply module in an application program of the task event on the background, data input in the input bar.

With reference to the first aspect or the third possible implementation manner of the first aspect, in a fifth possible implementation manner, the corresponding function button is a callback button, and the executing, in the status item, a function corresponding to the function button when an operation on the function button is detected specifically includes:
obtaining a contact number in the task event as a called number when an operation on the callback button is detected; and
calling the called number by invoking a callback module in an application program of the task event on the background.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner, the method further includes:
removing the status item of the task event from the status bar when a response indicating successful execution of the function is detected.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, or the sixth possible implementation manner of the first aspect, in a seventh possible implementation manner, the method further includes:
adding a remove button for the status bar or each status item; and
when an operation on the remove button is detected, removing a status item from the status bar or removing a status item in which the remove button is located.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, or the seventh possible implementation manner of the first aspect, in an eighth possible implementation manner, the method further includes:
adding a switch button for the status bar; and
switching a task event processing interface to a default task event list interface of a terminal system when an operation on the switch button is detected.

According to a second aspect, an embodiment of the present invention provides an apparatus for processing a task event, including:
a button adding module, configured to create a function button for a task event, and add the function button to a status item corresponding to the task event in a status bar; and
a processing module, configured to execute, in the status item, a function corresponding to the function button when an operation on the function button is detected.

In a first possible implementation manner of the second aspect, the apparatus further includes a classifying module, configured to:
classify the task event according to an event type of the task event, where:
   the processing module is further configured to receive a processing result of the classifying module, and add, according to the classification, the task event to a status item on a tab corresponding to a type in the status bar.

With reference to the second aspect or the first possible implementation manner of the second aspect, in a second possible implementation manner, the classifying module includes:
a first classifying module, configured to determine, according to a system attribute of the task event, that a task event whose system attribute is a system internal event is of a notification type, and that a task event whose system attribute is a system external event is of a non-notification type;
a second classifying module, configured to receive a processing result of the first classifying module, and determine, according to a type attribute of the task event of the non-notification type, that a talk-type task event is of a call type, and that a non-talk-type task event is of a non-call type; and
a third classifying module, configured to receive a processing result of the second classifying module, and determine, according to a number attribute of the task event of the non-call type, that a task event whose number attribute is a set number range is of a notification type, and that a task event whose number attribute is not a set number range is of an information type.

With reference to the second aspect, the first possible implementation manner of the second aspect, or the second possible implementation manner of the second aspect, in a third possible implementation manner of the second aspect, the button adding module is specifically configured to create a corresponding function button for the task event according to the classification.

With reference to the second aspect or the third possible implementation manner of the second aspect, in a fourth possible implementation manner, the corresponding function button is a reply button, and the processing module includes:
an input bar adding module, configured to add an input bar to the status item when an operation on the reply button is detected; and
a processing and sending module, configured to receive data in the input bar of the input bar adding module, and process and/or send the data by invoking a reply module in an application program of the task event on the background.

With reference to the second aspect or the third possible implementation manner of the second aspect, in a fifth possible implementation manner, the corresponding function button is a callback button, and the processing module includes:
a called number obtaining module, configured to obtain a contact number in the task event as a called number when an operation on the callback button is detected; and
a calling module, configured to receive the called number from the called number obtaining module, and call the called number by invoking a callback module in an application program of the task event on the background.

With reference to the second aspect, the first possible implementation manner of the second aspect, the second possible implementation manner of the second aspect, the third possible implementation manner of the second aspect, the fourth possible implementation manner of the second aspect, or the fifth possible implementation manner of the second aspect, in a sixth possible implementation manner, the processing module is further configured to remove the status item of the task event from the status bar when a response indicating successful execution of the function is detected.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, or the sixth possible implementation manner of the second aspect, in a seventh possible implementation manner, the button adding module is further configured to add a remove button for the status bar or each status item; and
the processing module is further configured to: when an operation on the remove button is detected, remove a status item from the status bar or remove a status item in which the remove button is located.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, or the seventh possible implementation manner of the second aspect, in an eighth possible implementation manner, the button adding module is further configured to add a switch button for the status bar; and
the processing module is further configured to switch a task event processing interface to a default task event list interface of a terminal system when an operation on the switch button is detected.

In the embodiments, a function button is created for a task event of a user terminal, and the function button is added to a status item corresponding to the task event in a status bar, so that a user can, after viewing the task event in the status bar of a terminal system, directly perform an operation on the task event by tapping the function button of the task event without switching a display interface or interrupting a current operation of the user. In this way, efficiency of viewing and processing the task event is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a flowchart of a method for processing a task event according to Method Embodiment 1 of the present invention;
FIG. 2 is a schematic diagram of a function button of the task event in Method Embodiment 1;
FIG. 3 is a flowchart of a method for processing a task event according to Method Embodiment 2 of the present invention;
FIG. 4 is a flowchart of a method for processing a task event according to Method Embodiment 3 of the present invention;
FIG. 5 is a flowchart of a method for processing a task event according to Method Embodiment 4 of the present invention;
FIG. 6 is a schematic diagram of an input bar added in a range of a status item in FIG. 5;
FIG. 7 is a flowchart of a method for processing a task event according to Method Embodiment 5 of the present invention;
FIG. 8 and FIG. 9 are schematic diagrams of a method for processing a task event according to Method Embodiment 6 of the present invention;
FIG. 10 and FIG. 11 are schematic diagrams of a method for processing a task event according to Method Embodiment 7 of the present invention;
FIG. 12 and FIG. 13 are schematic diagrams of a method for processing a task event according to Method Embodiment 8 of the present invention;
FIG. 14 is a schematic structural diagram of an apparatus for processing a task event according to Apparatus Embodiment 1 of the present invention;
FIG. 15 is a schematic structural diagram of an apparatus for processing a task event according to Apparatus Embodiment 2 of the present invention; and
FIG. 16 is a schematic structural diagram of an intelligent terminal according to another embodiment of the present invention.

### DESCRIPTION OF EMBODIMENTS

To make the objectives, technical solutions, and advantages of the present invention clearer, the following clearly and completely describes the technical solutions in the present invention with reference to the accompanying drawings in the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

### Method Embodiment 1

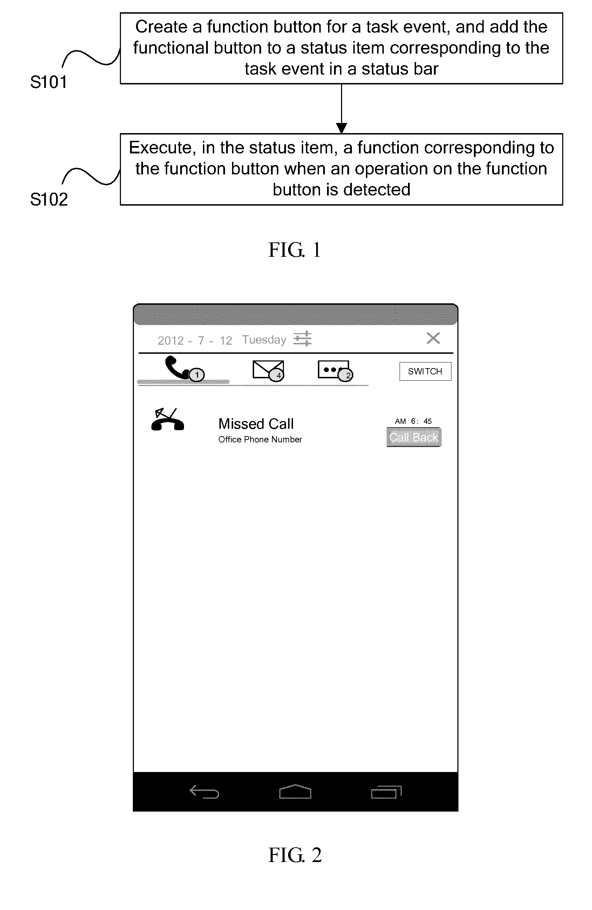

FIG. 1 is a flowchart of a method for processing a task event according to Method Embodiment 1 of the present invention. The processing method according to this embodiment is applicable to processing of a task event detected in a user terminal. This method may be executed by a processing apparatus, where the processing apparatus may be implemented by software and be configured in an intelligent terminal. As shown in FIG. 1, the method according to this embodiment may include:

S101. Create a function button for a task event, and add the function button to a status item corresponding to the task event in a status bar.

Specifically, the task event is a task that is currently generated, is detected by the user terminal, and needs to be processed, for example, a received SMS message or QQ message, or a received phone call. A corresponding function button may be created for the task event according to a related operation to be performed by a user on the task event, so as to help the user to quickly process the task event. The task event is displayed in a form of a status item in the status bar. Each task event is corresponding to a status item. The function button is added to the status item corresponding to the task event in the status bar, so that the user can perform a corresponding processing operation on the task event by using the added function button without switching a display interface.

FIG. 2 is a schematic diagram of a function button of the task event in Method Embodiment 1. As shown in FIG. 2, a callback function button is added for a task event of a missed call in the status bar of the user terminal, so that the user can tap the callback button to perform a callback operation.

S102. Execute, in the status item, a function corresponding to the function button when an operation on the function button is detected.

Specifically, the user terminal monitors an operation performed by the user on the task event. For example, the user may tap once, tap multiple times, or touch and hold the function button of the task event to perform an operation on the task event. After detecting the operation performed by the user on the task event, the user terminal may invoke, on the background, a function module of the task event tapped by the user, so as to execute, in the status item, the function corresponding to the function button. For example, for the task event of the missed call shown in FIG. 2, after the user taps the callback button in the status item, the user terminal executes, by invoking a phone function module on the background, the operation of the user on the task event corresponding to the status item.

In this embodiment, a function button is created for a task event of a user terminal, and the function button is added to a status item corresponding to the task event in a status bar, so that a user can, after viewing the task event in the status bar of a terminal system, directly perform an operation on the task event by tapping the function button of the task event without switching a display interface or interrupting a current operation of the user. In this way, efficiency of viewing and processing the task event is improved.

### Method Embodiment 2

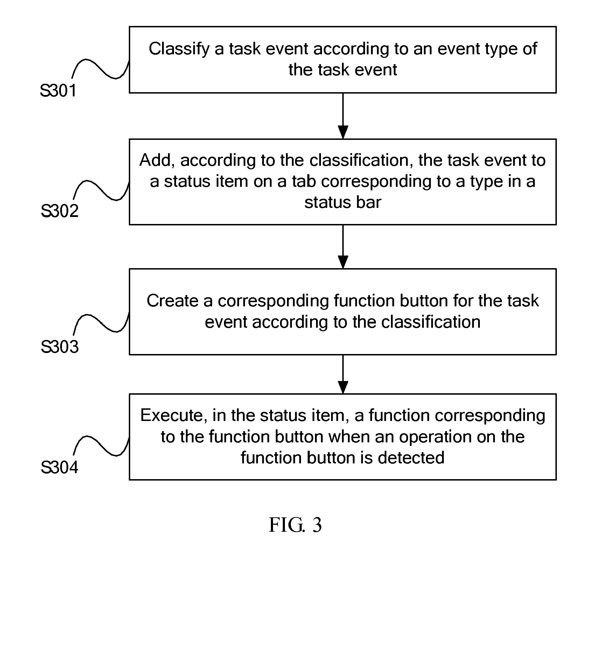

FIG. 3 is a flowchart of a method for processing a task event according to Method Embodiment 2 of the present invention. As shown in FIG. 3, the method according to this embodiment may include:

S301. Classify a task event according to an event type of the task event.

Different types of task events require a user to perform different processing operations. Therefore, a task event is classified according to a type of a task event received by a terminal, so as to facilitate operations of a user.

S302. Add, according to the classification, the task event to a status item on a tab corresponding to a type in the status bar.

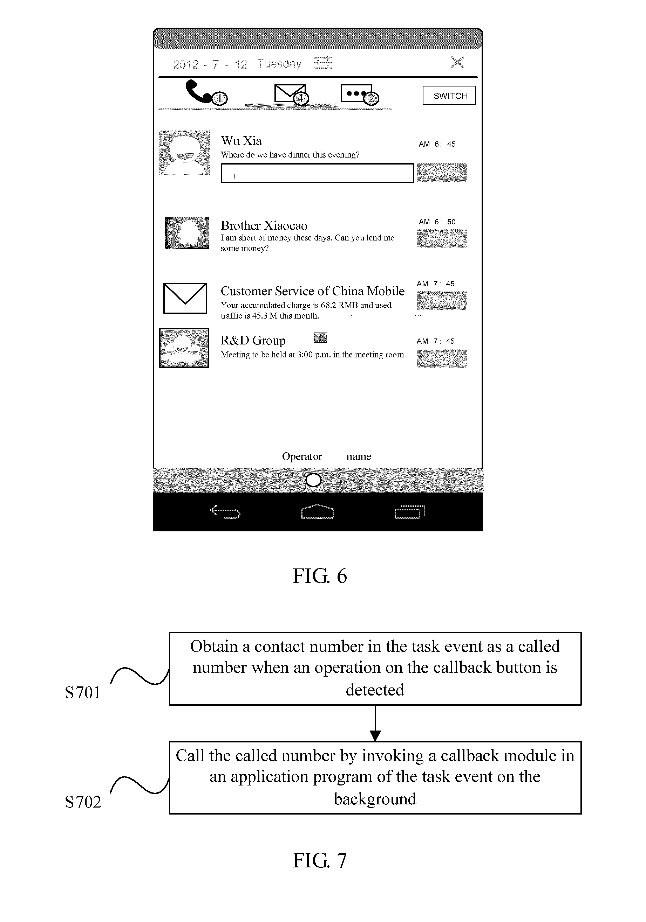

In a terminal notification system, different types of task events are separately corresponding to different tabs, and the task events are separately added to status items on tabs corresponding to types in the status bar, where the number of task events of a type corresponding to a tab is displayed in a numeric form at an icon place of each tab. For example, in FIG. 2, a tab for a call type shows 1 phone task event; in FIG. 6, a tab for an information type shows 4 information task events.

S303. Create a corresponding function button for the task event according to the classification.

Specifically, a function button corresponding to an event type of the task event is created for the task event, and the function button is added to a status item corresponding to the task event in the status bar, so as to help the user to quickly process the task event.

S304. Execute, in the status item, a function corresponding to the function button when an operation on the function button is detected.

Specifically, the user terminal monitors an operation performed by the user on the task event. For example, the user may tap once, tap multiple times, or touch and hold the function button of the task event to perform an operation on the task event. After detecting the operation performed by the user on the task event, the user terminal may invoke, on the background, a function module of the task event tapped by the user, so as to execute, in the status item, the function corresponding to the function button.

In this embodiment, task events are classified, and the task events are separately added to status items on tabs corresponding to types in the status bar, which facilitates operations of the user and improves efficiency of processing the task events.

### Method Embodiment 3

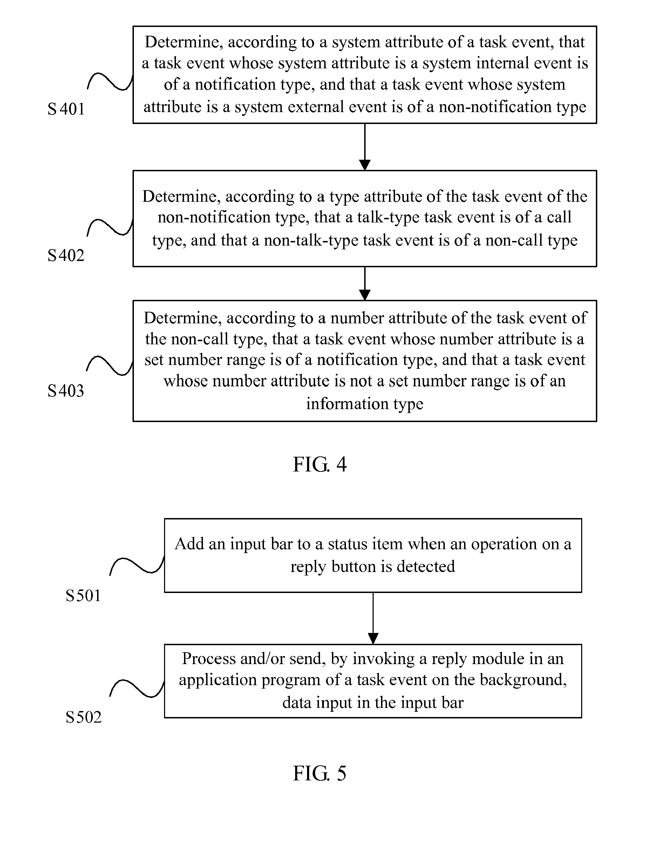

FIG. 4 is a flowchart of a method for processing a task event according to Method Embodiment 3 of the present invention. As shown in FIG. 4, on the basis of the foregoing method embodiments, the classifying the task event according to an event type of the task event may specifically include:

S401. Determine, according to a system attribute of the task event, that a task event whose system attribute is a system internal event is of a notification type, and that a task event whose system attribute is a system external event is of a non-notification type.

The system attribute of the task event indicates a source of the task event, that is, indicates whether the task event comes from the inside of a system or outside of a system. For the task event received by the user terminal, it may be first determined, according to the system attribute of the task event, whether the task event is an internal event of the terminal system, for example, an alarm clock event or a system update event, and internal events of the terminal system are classified as the notification type.

S402. Determine, according to a type attribute of the task event of the non-notification type, that a talk-type task event is of a call type, and that a non-talk-type task event is of a non-call type.

The type attribute of the task event indicates a function type of the task event. For example, the task event may be of a call type, a mobile phone SMS message type, or an instant communication software message type. Preferably, a task event of a call type is extracted from task events of the non-notification type, and the task event of the call type may be further classified, according to a number attribute of the task event of the call type and different requirements of the user, into a call type requiring reply and a call type requiring no reply.

S403. Determine, according to a number attribute of the task event of the non-call type, that a task event whose number attribute is a set number range is of a notification type, and that a task event whose number attribute is not a set number range is of an information type.

The number attribute of the task event indicates an information source of the task event. For example, whether the task event is from a telecommunication operator may be identified according to the number attribute of the task event. It may be distinguished, according to the number attribute of the task event of the non-call type, whether the task event is a task event belonging to a type that does not require the user to perform a reply operation, such as a value-added type or a customer service type, and the task event of this type is classified as a notification type. The user may tap to view the task event of the notification type, such as weather information, government announcements, and advertisement information.

Preferably, a task event whose number belongs to a software system may be determined, according to a number attribute of a task event of the information type, as a task event of an information type that requires no reply, for example, a system notification message event sent by instant software, or otherwise, as a task event of an information type that requires reply. Further, the task event of the information type that requires no reply may be further classified as a notification type.

Optionally, the creating a function button for a task event may specifically include: creating a corresponding function button for the task event according to the classification.

In the method for processing the task event, the creating a functional button for a function of the task event may specifically include: creating a function button corresponding to a type according to the classification of the task event.

Function operation buttons that are commonly used by a user are added for different types of task events, so that the user can perform a viewing or processing operation on a task event without accessing an application program corresponding to the task event. In this way, efficiency of processing the task events is improved.

### Method Embodiment 4

FIG. 5 is a flowchart of a method for processing a task event according to Method Embodiment 4 of the present invention. As shown in FIG. 5, on the basis of Method Embodiment 1 of the present invention shown in FIG. 1, the corresponding function button is a reply button, and in S102, the executing, in the status item, a function corresponding to the function button when an operation on the function button is detected may specifically include:

S501. Add an input bar to the status item when an operation on the reply button is detected.

FIG. 6 is a schematic diagram of an input bar added in a range of the status item in FIG. 5. As shown in FIG. 6, when the operation of the user on the reply button is detected, the user terminal adds the input bar to the status item, and invokes an input method keyboard for the user to input reply content. The user can perform the reply operation by tapping once, tapping multiple times, or touching and holding the reply button.

S502. Process and/or send, by invoking a reply module in an application program of the task event on the background, data input in the input bar.

Specifically, after finishing inputting the reply content, the user can tap a send button to confirm sending of the input data. After detecting that the user taps the reply button, the user terminal packs the content data input by the user, and sends, by invoking on the background the application program of the task event corresponding to the content data input by the user, the content data input by the user. The user can also choose to send empty information, or save the input content to a draft box.

In this embodiment, a reply button is added for a message task event in a status bar of a user terminal, and an input bar is added to a status item of the task event, so that a user can directly input reply content in the input bar after viewing a task event that requires reply in the status bar of a terminal system. In this way, efficiency of processing the task event is improved.

### Method Embodiment 5

FIG. 7 is a flowchart of a method for processing a task event according to Method Embodiment 5 of the present invention. As shown in FIG. 7, on the basis of the foregoing method embodiments, the corresponding function button is a callback button, and the executing, in the status item, a function corresponding to the function button when an operation on the function button is detected may specifically include:

S701. Obtain a contact number in the task event as a called number when an operation on the callback button is detected.

For a call task event in the status bar of the terminal system of the user, the user may perform a calling operation by directly tapping the callback button in the status item of the task event. When detecting the operation of tapping the callback button performed by the user, the user terminal obtains a contact number in the task event as a callback number.

S702. Call the called number by invoking a callback module in an application program of the task event on the background.

Specifically, after detecting that the user taps the callback button, the user terminal may invoke an application program of the task event on the background. With regard to the callback operation of the user, a phone call application program invokes a callback module of the phone call application program to execute the callback operation of the user on the obtained phone number of the task event.

In this embodiment, a callback button is added for a call task event in a status bar of a user terminal, so that a user can perform a calling operation by directly tapping the callback button in a status item of the task event. In this way, efficiency of processing the task event is improved.

Optionally, the status item of the task event is removed from the status bar when a response indicating successful execution of the function is detected.

In the foregoing method for processing a task event, when detecting a response indicating successful execution of a function task event in the status bar, the user terminal can remove a status item of the task event from the status bar of the user terminal, so as to reduce the number of task events displayed in the status bar and facilitate operations of the user.

Optionally, the foregoing method for processing a task event further includes: adding a remove button for the status bar or each status item; and when an operation on the remove button is detected, removing a task event from the status bar or removing a status item in which the remove button is located.

In this embodiment, a task event that has been processed by a user or that does not need to be processed according to consideration of a user is removed in a timely manner. In this way, efficiency of viewing and processing the task event is improved.

### Method Embodiment 6

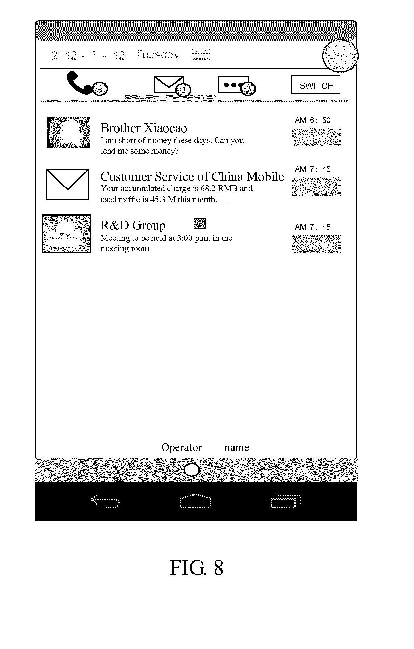

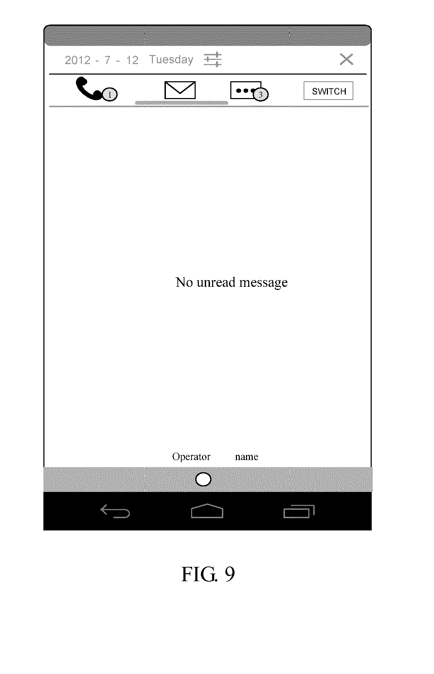

FIG. 8 and FIG. 9 are schematic diagrams of a method for processing a task event according to Method Embodiment 6 of the present invention. As shown in FIG. 8, a user taps a remove button on a tab of unread messages. As shown in FIG. 9, a user terminal detects the tap operation on the remove button, and removes all status items from the tab of unread messages.

In the foregoing method for processing a task event, the user terminal may further add the remove button for the status bar or each status item, and the user may choose to remove content from the status bar or the status item by using the remove button in the status bar or each status item. When an operation on the remove button is detected, the user terminal removes a task event from the status bar or removes a status item in which the remove button is located.

In this embodiment, a remove button is added for a status bar or each status item of a user terminal, so that a user can conveniently remove processed content. In this way, efficiency of processing the task event is improved.

### Method Embodiment 7

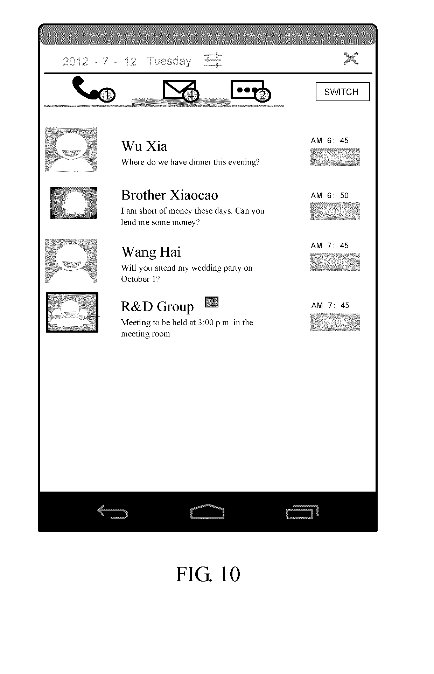

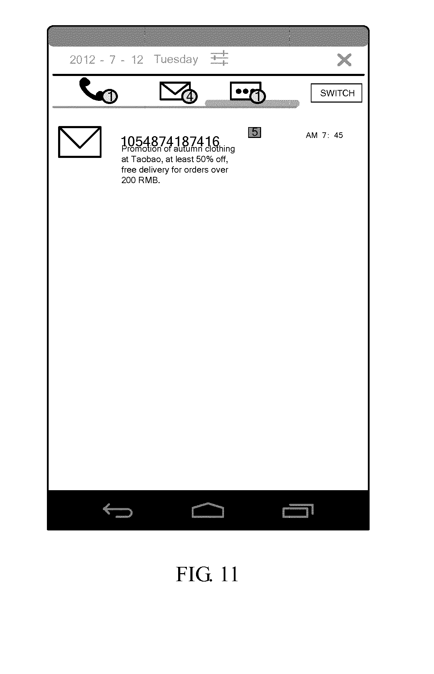

FIG. 10 and FIG. 11 are schematic diagrams of a method for processing a task event according to Method Embodiment 7 of the present invention. As shown in FIG. 10, status items on a tab of unread messages in a terminal notification system are task events of an information type that require a user to reply; the user can directly reply by tapping a reply button. As shown in FIG. 11, a user terminal detects a task event of an information type that requires no reply, and displays the task event on a tab for a notification type.

In this embodiment, task events are classified in a detailed manner, and function buttons that are commonly used by a user are created for different classified events, which facilitates operations of the user and improves efficiency of processing the task events.

### Method Embodiment 8

Optionally, for a task event of a mobile phone SMS message, a callback button may be further added to a status item corresponding to the task event. For a task event of a mobile phone call, a reply button may be further added to a status item corresponding to the task event.

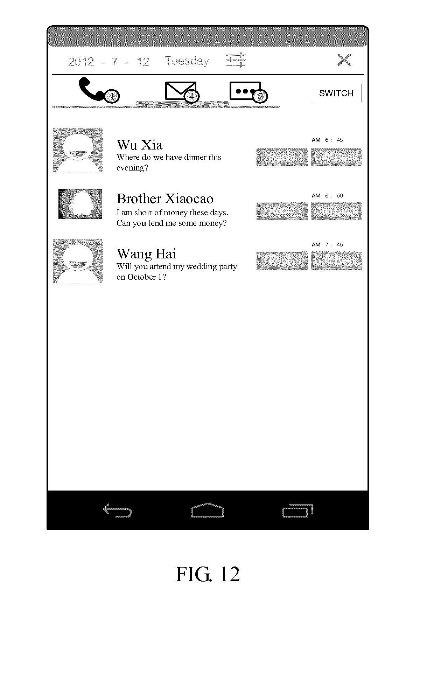

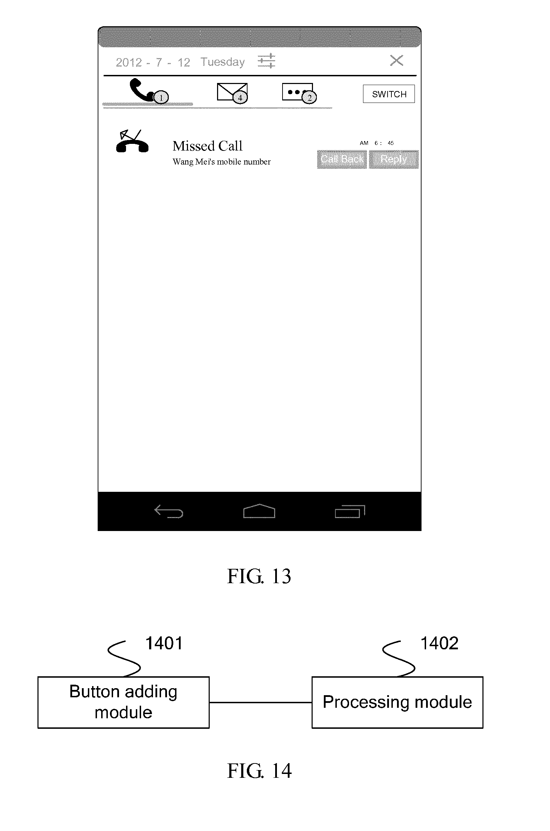

FIG. 12 and FIG. 13 are schematic diagrams of a method for processing a task event according to Method Embodiment 8 of the present invention. As shown in FIG. 12, for the task event of the mobile phone SMS message, a user may initiate a callback to a peer end by using the callback button in the status item corresponding to the task event. As shown in FIG. 13, for the task event of the mobile phone call, the user may send a reply SMS message to a peer end by using the reply button in the status item corresponding to the task event.

In this embodiment, function buttons that are commonly used by a user are added for a task event of a mobile phone SMS message and a task event of a mobile phone call, which facilitates operations of the user and improves efficiency of processing the task event.

Optionally, the foregoing method for processing a task event may further include:
adding a switch button for the status bar; and
switching a task event processing interface to a default task event list interface of a terminal system when an operation on the switch button is detected.

In the foregoing method for processing a task event, a switch button may further be added for a status bar of a user terminal according to requirements of a user, as the SWITCH button shown in the figures of the foregoing embodiments. The user can tap the switch button to switch a task event processing interface to a common task event interface, so as to satisfy operation habits of different users.

### Apparatus Embodiment 1

FIG. 14 is a schematic structural diagram of an apparatus for processing a task event according to Apparatus Embodiment 1 of the present invention. As shown in FIG. 14, the apparatus according to this embodiment may include a button adding module 1401 and a processing module 1402. The button adding module 1401 is configured to create a function button for a task event, and add the function button to a status item corresponding to the task event in a status bar. The processing module 1402 is configured to execute, in the status item, a function corresponding to the function button when an operation on the function button is detected.

The apparatus for processing a task event according to this embodiment may be used to execute the method according to the method embodiment shown in FIG. 1, and has corresponding function modules. The implementation principle and to-be-achieved technical effects of the apparatus embodiment are similar to those of the method embodiment, and are not described herein again.

### Apparatus Embodiment 2

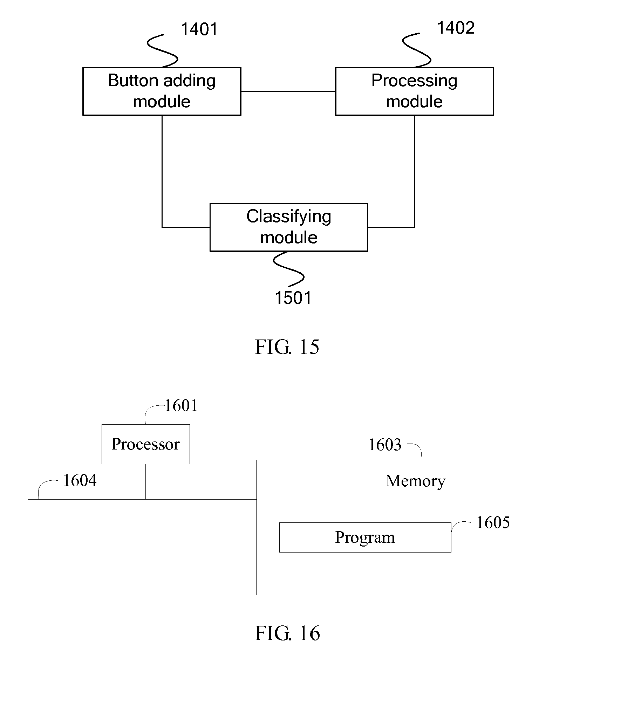

FIG. 15 is a schematic structural diagram of an apparatus for processing a task event according to Apparatus Embodiment 2 of the present invention. As shown in FIG. 15, the apparatus according to this embodiment may further include a classifying module 1501, configured to classify the task event according to an event type of the task event, where the processing module 1402 may be further configured to receive a processing result of the classifying module, and add, according to the classification, the task event to a status item on a tab corresponding to a type in the status bar.

The apparatus for processing a task event according to this embodiment may be used to execute the method according to the method embodiment shown in FIG. 3, and has corresponding function modules. The implementation principle and technical effects to be achieved are similar to those of the method embodiment, and are not described herein again.

According to the foregoing apparatus for processing a task event, the classifying module 1501 includes a first classifying module, a second classifying module, and a third classifying module. The first classifying module is configured to determine, according to a system attribute of the task event, that a task event whose system attribute is a system internal event is of a notification type, and that a task event whose system attribute is a system external event is of a non-notification type. The second classifying module is configured to receive a processing result of the first classifying module, and determine, according to a type attribute of the task event of the non-notification type, that a talk-type task event is of a call type, and that a non-talk-type task event is of a non-call type. The third classifying module is configured to receive a processing result of the second classifying module, and determine, according to a number attribute of the task event of the non-call type, that a task event whose number attribute is a set number range is of a notification type, and that a task event whose number attribute is not a set number range is of an information type.

The apparatus for processing a task event according to this embodiment may be used to execute the method according to the method embodiment shown in FIG. 4, and has corresponding function modules. The implementation principle and technical effects to be achieved are similar to those of the method embodiment, and are not described herein again.

According to the foregoing apparatus for processing a task event, the button adding module 1401 may be specifically configured to create a corresponding function button for the task event according to the classification.

An implementation principle of and technical effects to be achieved by the apparatus for processing a task event according to this embodiment have been described above, and are not described herein again.

According to the foregoing apparatus for processing a task event, the function button is a reply button, and the processing module 1402 includes an input bar adding module and a processing and sending module. The input bar adding module is configured to add an input bar to the status item when an operation on the reply button is detected. The processing and sending module is configured to receive data in the input bar of the input bar adding module, and process and/or send the data by invoking a reply module in an application program of the task event on the background.

The apparatus for processing a task event according to this embodiment may be used to execute the method according to the method embodiment shown in FIG. 5, and has corresponding function modules. The implementation principle and technical effects to be achieved are similar to those of the method embodiment, and are not described herein again.

According to the foregoing apparatus for processing a task event, the function button is a callback button, and the processing module 1402 includes a called number obtaining module and a calling module. The called number obtaining module is configured to obtain a contact number in the task event as a called number when an operation on the callback button is detected. The calling module is configured to receive the called number from the called number obtaining module, and call the called number by invoking a callback module in an application program of the task event on the background.

The apparatus for processing a task event according to this embodiment may be used to execute the method according to the method embodiment shown in FIG. 7, and has corresponding function modules. The implementation principle and technical effects to be achieved are similar to those of the method embodiment, and are not described herein again.

According to the foregoing apparatus for processing a task event, the processing module 1402 may be further configured to remove the status item of the task event from the status bar when a response indicating successful execution of the function is detected.

An implementation principle of and technical effects to be achieved by the apparatus for processing a task event according to this embodiment have been described above, and are not described herein again.

According to the foregoing apparatus for processing a task event, the button adding module 1401 may be further configured to add a remove button for the status bar or each status item; and the processing module 1402 may be further configured to: when an operation on the remove button is detected, remove a status item from the status bar or remove a status item in which the remove button is located.

An implementation principle of and technical effects to be achieved by the apparatus for processing a task event according to this embodiment have been described above, and are not described herein again.

According to the foregoing apparatus for processing a task event, the button adding module 1401 may be further configured to add a switch button for the status bar; and the processing module 1402 may be further configured to switch a task event processing interface to a default task event list interface of a terminal system when an operation on the switch button is detected.

An implementation principle of and technical effects to be achieved by the apparatus for processing a task event according to this embodiment have been described above, and are not described herein again.

FIG. 16 is a schematic structural diagram of an intelligent terminal according to another embodiment of the present invention. The intelligent terminal includes at least one processor 1601 (for example, a CPU), a memory 1603, and at least one communication bus 1604 for implementing connection and communication between apparatuses. The processor 1601 is configured to execute an executable module stored in the memory 1603, for example, a computer program. The memory 1603 may include a high speed random access memory (RAM, Random Access Memory), and may further include a non-volatile memory (non-volatile memory), for example, at least one magnetic disk memory.

In some implementation manners, the memory 1603 stores a program 1605. The program 1605 may be executed by the processor 1601, and the program includes executing a method for processing a task event, where the method includes:
creating a function button for a task event, and adding the function button to a status item corresponding to the task event in a status bar; and
executing, in the status item, a function corresponding to the function button when an operation on the function button is detected.

According to the foregoing program for executing the method for processing a task event, preferably, before the creating a function button for a task event, the method further includes:
classifying the task event according to an event type of the task event; and
adding, according to the classification, the task event to a status item on a tab corresponding to a type in the status bar.

According to the foregoing program for executing the method for processing a task event, preferably, the classifying the task event according to an event type of the task event specifically includes:
determining, according to a system attribute of the task event, that a task event whose system attribute is a system internal event is of a notification type, and that a task event whose system attribute is a system external event is of a non-notification type;
determining, according to a type attribute of the task event of the non-notification type, that a talk-type task event is of a call type, and that a non-talk-type task event is of a non-call type; and
determining, according to a number attribute of the task event of the non-call type, that a task event whose number attribute is a set number range is of a notification type, and that a task event whose number attribute is not a set number range is of an information type.

According to the foregoing program for executing the method for processing a task event, preferably, the creating a function button for a task event specifically includes:
creating a corresponding function button for the task event according to the classification.

According to the foregoing program for executing the method for processing a task event, preferably, the corresponding function button is a reply button, and the executing, in the status item, a function corresponding to the function button when an operation on the function button is detected specifically includes:
adding an input bar to the status item when an operation on the reply button is detected; and
processing and/or sending, by invoking a reply module in an application program on the background, data input in the input bar.

According to the foregoing program for executing the method for processing a task event, preferably, the corresponding function button is a callback button, and the executing, in the status item, a function corresponding to the function button when an operation on the function button is detected specifically includes:
obtaining a contact number in the task event as a called number when an operation on the callback button is detected; and
calling the called number by invoking a callback module in an application program of the task event on the background.

According to the foregoing program for executing the method for processing a task event, preferably, the method further includes:
removing the status item of the task event from the status bar when a response indicating successful execution of the function is detected.

According to the foregoing program for executing the method for processing a task event, preferably, the method further includes:
adding a remove button for the status bar or each status item; and
when an operation on the remove button is detected, removing a status item from the status bar or removing a status item in which the remove button is located.

According to the foregoing program for executing the method for processing a task event, preferably, the method further includes:
adding a switch button for the status bar; and
switching a task event processing interface to a default task event list interface of a terminal system when an operation on the switch button is detected.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for processing a task event, comprising:
creating a function button for a task event, and adding the function button to a status item corresponding to the task event in a status bar; and
executing, in the status item, a function corresponding to the function button when an operation on the function button is detected.

2. The method for processing a task event according to claim 1, wherein before the creating a function button for a task event, the method further comprises:
classifying the task event according to an event type of the task event; and
adding, according to the classification, the task event to a status item on a tab corresponding to a type in the status bar.

3. The method for processing a task event according to claim 2, wherein the classifying the task event according to an event type of the task event specifically comprises:
determining, according to a system attribute of the task event, that the task event whose system attribute is a system internal event is of a notification type, and that a task event whose system attribute is a system external event is of a non-notification type;
determining, according to a type attribute of the task event of the non-notification type, that a talk-type task event is of a call type, and that a non-talk-type task event is of a non-call type; and
determining, according to a number attribute of the task event of the non-call type, that a task event whose number attribute is a set number range is of a notification type, and that a task event whose number attribute is not a set number range is of an information type.

4. The method for processing a task event according to claim 2 or 3, wherein the creating a function button for a task event specifically comprises:
creating a corresponding function button for the task event according to the classification.

5. The method for processing a task event according to claim 4, wherein the corresponding function button is a reply button, and the executing, in the status item, a function corresponding to the function button when an operation on the function button is detected specifically comprises:
adding an input bar to the status item when an operation on the reply button is detected; and
processing and/or sending, by invoking a reply module in an application program of the task event on the background, data input in the input bar.

6. The method for processing a task event according to claim 4, wherein the corresponding function button is a callback button, and the executing, in the status item, a function corresponding to the function button when an operation on the function button is detected specifically comprises:
obtaining a contact number in the task event as a called number when an operation on the callback button is detected; and
calling the called number by invoking a callback module in an application program of the task event on the background.

7. The method for processing a task event according to any one of claims 1 to 6, wherein the method further comprises:
removing the status item of the task event from the status bar when a response indicating successful execution of the function is detected.

8. The method for processing a task event according to any one of claims 1 to 7, wherein the method further comprises:
adding a remove button for the status bar or each status item; and
when an operation on the remove button is detected, removing a status item from the status bar or removing a status item in which the remove button is located.

9. The method for processing a task event according to any one of claims 1 to 8, wherein the method further comprises:
adding a switch button for the status bar; and
switching a task event processing interface to a default task event list interface of a terminal system when an operation on the switch button is detected.

10. An apparatus for processing a task event, comprising:
a button adding module, configured to create a function button for a task event, and add the function button to a status item corresponding to the task event in a status bar; and
a processing module, configured to execute, in the status item, a function corresponding to the function button when an operation on the function button is detected.

11. The apparatus for processing a task event according to claim 10, further comprising a classifying module, configured to:
classify the task event according to an event type of the task event, wherein:
the processing module is further configured to receive a processing result of the classifying module, and add, according to the classification, the task event to a status item on a tab corresponding to a type in the status bar.

12. The apparatus for processing a task event according to claim 11, wherein the classifying module comprises:
a first classifying module, configured to determine, according to a system attribute of the task event, that a task event whose system attribute is a system internal event is of a notification type, and that a task event whose system attribute is a system external event is of a non-notification type;
a second classifying module, configured to receive a processing result of the first classifying module, and determine, according to a type attribute of the task event of the non-notification type, that a talk-type task event is of a call type, and that a non-talk-type task event is of a non-call type; and
a third classifying module, configured to receive a processing result of the second classifying module, and determine, according to a number attribute of the task event of the non-call type, that a task event whose number attribute is a set number range is of a notification type, and that a task event whose number attribute is not a set number range is of an information type.

13. The apparatus for processing a task event according to claim 11 or 12, wherein the button adding module is specifically configured to create a corresponding function button for the task event according to the classification.

14. The apparatus for processing a task event according to claim 13, wherein the corresponding function button is a reply button, and the processing module comprises:
an input bar adding module, configured to add an input bar to the status item when an operation on the reply button is detected; and
a processing and sending module, configured to receive data in the input bar of the input bar adding module, and process and/or send the data by invoking a reply module in an application program of the task event on the background.

15. The apparatus for processing a task event according to claim 13, wherein the corresponding function button is a callback button, and the processing module comprises:
a called number obtaining module, configured to obtain a contact number in the task event as a called number when an operation on the callback button is detected; and
a calling module, configured to receive the called number from the called number obtaining module, and call the called number by invoking a callback module in an application program of the task event on the background.

16. The apparatus for processing a task event according to any one of claims 10 to 15, wherein the processing module is further configured to remove the status item of the task event from the status bar when a response indicating successful execution of the function is detected.

17. The apparatus for processing a task event according to any one of claims 10 to 16, wherein the button adding module is further configured to add a remove button for the status bar or each status item; and
the processing module is further configured to: when an operation on the remove button is detected, remove a status item from the status bar or remove a status item in which the remove button is located.

18. The apparatus for processing a task event according to any one of claims 10 to 17, wherein the button adding module is further configured to add a switch button for the status bar; and
the processing module is further configured to switch a task event processing interface to a default task event list interface of a terminal system when an operation on the switch button is detected.
